# EUROPEAN PATENT SPECIFICATION

(11) **EP 1 303 707 B1**
(45) Date of publication and mention of the grant of the patent: **06.09.2006**
(21) Application number: 01969437.1
(22) Date of filing: 19.07.2001
(51) Int. Cl.: F16D 3/84

(54) **DEVICE FOR PROTECTING JOINTS**
SCHUTZVORRICHTUNG FÜR GELENKE
DISPOSITIF DE PROTECTION DE JOINTS

(30) Priority: 26.07.2000 EP 00830530
(43) Date of publication of application: 23.04.2003
(73) Proprietor: Falga S.r.l., 28011 Armeno (NO) (IT)
(72) Inventor: BRIGATTI, Francesco, I-28011 Armeno (IT)
(74) Representative: Valentini, Giuliano
(86) International application number: PCT/EP2001/008354
(87) International publication number: WO 2002/008625

(56) References cited:
- EP-A- 0 157 559
- EP-A- 0 403 163
- DE-A- 3 324 997
- GB-A- 2 340 900
- US-A- 4 558 869
- US-A- 5 026 323

## Description

### Technical Field

The present invention relates in general a device or boot for protecting an articulated rotating joint, of the type generally made of a soft and flexible material, such as an elastomer or the like, and in particular a universal-type protective boot, i.e. of the type designed to be mounted on joints having different sizes and characteristics.

These devices or boots find an application, for example, in the automobile industry, for protecting articulated rotating joints from external dust and impurities, as well as for retaining a certain amount of lubricating grease in contact with the joint, in order to guarantee proper operation of the joint itself.

Protective boots are generally mounted with one end that surrounds the shell of the joint and which is held firmly in position by a clamp, whereas the other end is generally fitted in a sealed way on a shaft coming out of the joint, this end too being secured by a clamp.

Automobile manufacturers use various types of joints, both as regards the size and the characteristics of the surface on which the boot is to be mounted. Apart from the size, the most common types of joints, at the end where the boot is to be mounted, have a shell portion which may be smooth to offer a wide surface of contact between the boot and the shell of the joint, or else may be provided with one or more external annular grooves having a substantially quadrangular section which are designed to receive a seal profile protruding from the inner surface of the boot.

Consequently, above all in the spare parts industry, the need is particularly felt to have available a "universal" protection boot, namely a protective boot that may be suitable for being mounted on any type of joint, irrespective of the size of the latter or of the type of surface designed to receive the boot.

### Background Art

Up to now numerous attempts have been made for producing universal boots, as, for example, that described in Patent Application FR-A-2.729.725. The boot proposed in this document of the prior art comprises at least one end portion provided with cylindrical mounting sections having different diameters In order to adapt to the typical dimensions of the most widespread joint shells and to enable removal of possible exceeding portions.

Each mounting section moreover comprises a V-shaped annular fold which, once the clamp has been tightened, may be flattened onto the outer surface of the joint shell in case an annular groove for a sealing element is not provided on the latter, or else may be inserted with its tip portion inside the groove in case a groove is provided on the joint shell.

This solution, however, has various drawbacks. First of all, when the boot is to be mounted on a smooth shell, the presence of the V-shaped fold make it difficult the proper positioning of the boot on the shell.

On the other hand, If the boot is mounted on a joint shell provided with a groove, the "V" shape of the fold does not fit perfectly in the quadrangular-section groove since the tip portion of the fold abuts in irregular way against the bottom of the groove. Consequently, once the clamp has been tightened, the walls of the V-shaped fold tend to get deformed and to lose contact with the edges of the groove, thus creating areas in which loss of tightness of the seal may occur.

GB-A-2340900 discloses a boot according to the preamble of claim 1. The boot is held in position on the joint by means of a sealing element inserted into a circumferential groove of the joint shell and without using band or crimp-style clamps fitted on the outer surface of the boot.

### Disclosure of Invention

One object of the present invention is to overcome the above-mentioned drawbacks of the prior art by proposing a universal device or boot for protecting an articulated rotating joint that may be more reliable as far as sealing is concerned.

Another object of the present invention is to propose a device of the above mentioned type that may be adapted in a particularly simple way for mounting on joints of any type, in particular both of the type with a smooth shell and of the type with a shell provided with an annular groove.

These objects are achieved by the present invention thanks to a device or boot according to claim 1 and a process for mounting a protective boot according to claim 9.

In this way, It is possible to mount the boot provided with the sealing element on joints having one or more grooves made on the outer shell, whilst in case where the shell of the joint is smooth, it is possible to remove the sealing element, thus leaving a smooth cylindrical surface in contact with the shell of the joint.

According to a preferential aspect, the sealing elements are made of a single piece with the internal walls of the mounting sections. This enables to form the device with a single moulding operation, thus also rendering the production of a boot according to the present invention particularly inexpensive.

The sealing elements preferably have a substantially circular cross section. In this case, when the boot is mounted on a joint provided with a groove, the sealing element penetrates uniformly under the tightening action of the clamp and comes into contact with all the walls of the groove, thus ensuring an optimal seal. The circular cross section of the sealing elements moreover guarantees optimal adaptation to any type of cross section of the groove or grooves.

The invention will now be described, purely to provide examples, with reference to the schematic attached drawings, in which:

### Brief description of Drawings

- Figure 1 is a sectional view of a portion of a protective boot according to the present invention;
- Figure 2 is an enlarged view of a detail of Figure 1;
- Figure 3 is a view showing a detail of the boot mounted on a joint shell having a smooth surface;
- Figure 4 is a view showing a detail of the boot mounted on a joint shell which is provided with a groove; and
- Figure 5 is an enlarged sectional view of a detail of Figure 4.

### Best mode for carrying out the invention

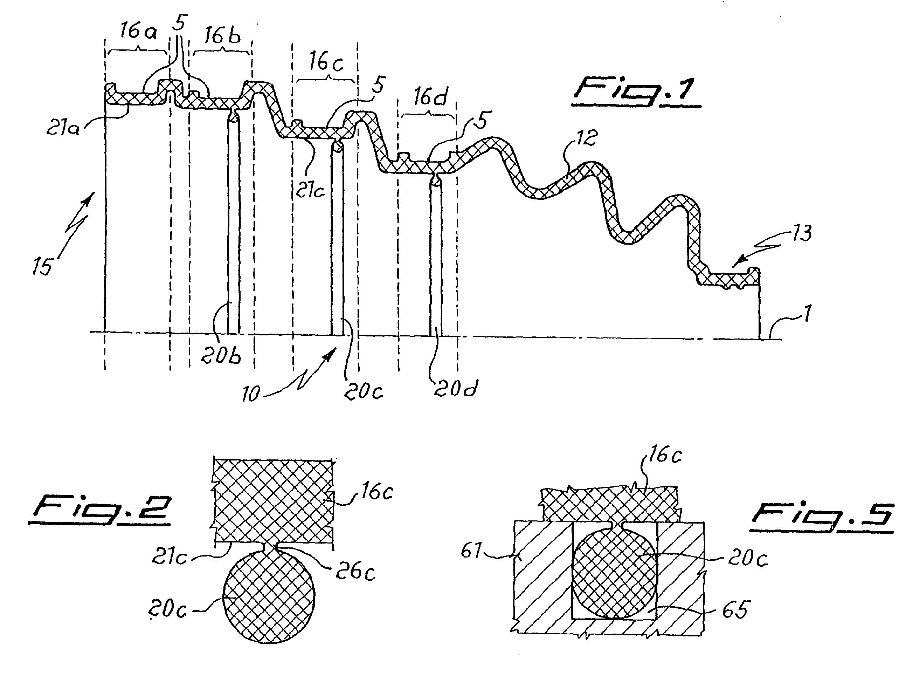

In Figure 1, only one half-portion of a universal protective device or boot 10 for an articulated rotating joint is represented for sake of simplicity. The remaining portion of the boot is specularly identical with respect to the symmetry axis 1.

The protective boot 10 is made of soft and elastic material, such as an elastomer or the like, and basically comprises a tubular body 12 having the shape of a cone or a truncated cone with an undulated pattern to enable flexure of the boot 10, as well the extension and contraction in the axial direction of the boot itself.

In the embodiment shown in Figure 1, the boot 10 comprises two end portions 13 and 15 having different diameters. The portion 13 is substantially cylindrical and is shaped in such a way that it can be put onto a shaft coming out from the joint (not shown in Figure 1) and can be tightened on the shaft to form a seal.

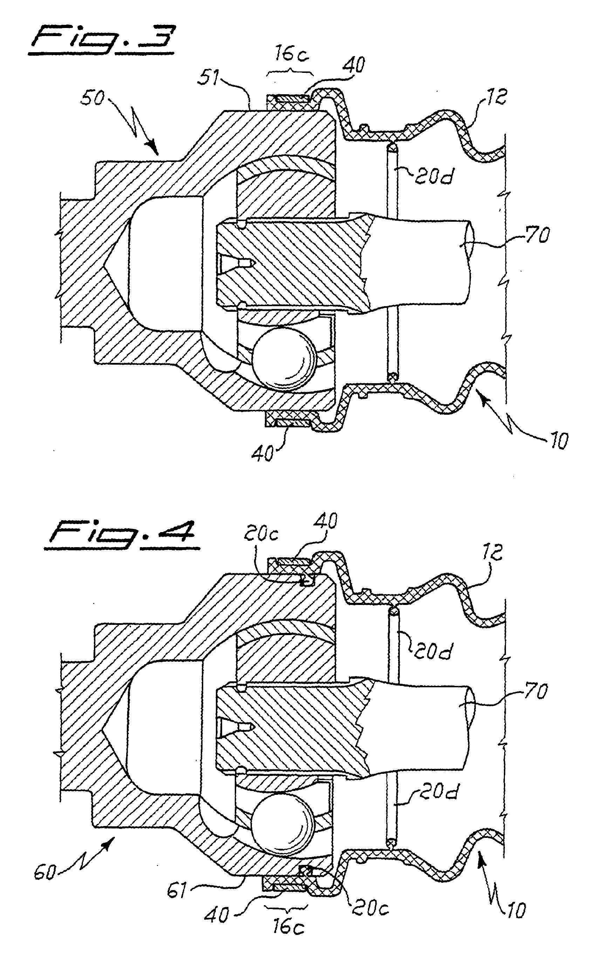

The end portion 15 comprises one or more substantially cylindrical mounting sections 16a, 16b, 16c, and 16d having different diameters which substantially correspond to the dimensions of the outer shells of the most widespread articulated joints. On the outer wall of the boot 10, in positions corresponding to each mounting section 16a-16d, there are provided seats 5 having appropriate shapes and sizes for receiving a clamp 40 (Figures 3 and 4).

Each mounting section of a diameter larger than that of the section used, for example 16a and 16b in Figures 3 and 4, may be cut away in case the boot 10 is mounted on a joint having a diameter corresponding to that of the section of immediately smaller diameter, for instance 16c in Figures 3 and 4.

According to a particularly advantageous aspect of the present invention, one or more removable sealing elements are envisaged which are set on the internal walls of the mounting sections, such as the sealing elements 20b, 20c and 20d. In the view represented in Figure 1, the mounting section 16a having the largest diameter is illustrated without a corresponding element in order to show the smooth conformation assumed by the internal wall 21 a of the mounting section 16a after removal of the corresponding sealing element.

Figure 2 is a view in greater detail of the section of the sealing element 20c in correspondence to the section 16c.

The sealing element 20c has a continuous annular development and a substantially circular section. In practice, the sealing element 20c is made of one piece with the internal wall of the mounting section 16c and is connected to the latter by means of a connecting portion 26c.

The sealing element 20c may therefore be left in position in case boot 10 is to be mounted on a joint with a shell provided with one of more grooves (Figure 4), or else may be removed, thus leaving the wall 21 c smooth, in the case where the boot 10 is to be mounted on a joint with a smooth shell.

It should be emphasized that also the other sealing elements, in particular elements 20b and 20d represented in Figure 1, are made in the same way as element 20c, and thus also these can be left in position or removed according to the type of joint on which the boot is to be mounted.

In the example illustrated in Figure 3, a joint 50 is shown which is provided with a shell 51 having a completely smooth outer surface. The universal protective boot 10 made according to the present invention is mounted on the joint 50 with its end of larger diameter mounted on the shell 51 in a position corresponding to the mounting section 16c, and with its end of smaller diameter (not shown) mounted on the shaft 70 coming out of the joint 50.

In this case, the mounting sections 16a and 16b have been removed, for example by means of a cut made before the seat 5 of the section 16c that receives the clamp 40. Since no groove is present in the shell 51 of the joint 50, also the sealing element 20c has been removed, thus allowing the smooth surface 21 c, present on the internal wall in a position corresponding to the mounting section 16c, to adhere throughout its extension to the outer surface of the shell 51. By tightening the clamp 40, an optimal seal is thus obtained between the smooth surfaces of the joint 50 and of the boot 10 that are in contact with one another.

An example of the universal protective boot 10 mounted on a joint 60 with a shell 61 provided with a groove 65 is shown in Figures 4 and 5.

Also in this case, the boot made according to the present invention is mounted on the shell 61 in a position corresponding to the mounting section 16c and with its end of smaller diameter (not shown) mounted on the shaft 70 coming out from the joint 60.

In the same way as for the case illustrated in Figure 3, the mounting sections 16a and 16b have been removed by making a cut before the seat 5 of the section 16c that receives the clamp 40. Differently from the previous case, the sealing element 20c has been left in position so as to be housed in the groove 65.

As is illustrated in greater detail in Figure 5, the sealing element 20c is inserted into the groove 65 in such a way as to come into tight contact with all the internal walls of the groove, thus guaranteeing, after tightening of the clamp, an optimal seal and certainly a more reliable seal as compared to known protective devices.

Other variations may be made without departing from the scope of the present invention. For example, the sealing elements may be provided only with some of the mounting sections and be absent in the positions corresponding to the remaining sections, in relation to the types of joints on which the universal boots according to the present invention are to be mounted.

Likewise, also the end portion 13 may have a diameter different from the one represented, and also this end portion may be provided with a number of mounting sections possibly equipped with removable sealing elements, again in relation to the types of joints on which the universal protective boot according to the present invention is to be mounted.

## Claims

1. A device or boot (10) for protecting an articulated rotating joint (50, 60), of the type made of soft and elastic material and comprising a tubular body (12) having opposite end portions (13, 15), said end portions comprising one or more substantially cylindrical mounting sections (16a-16d) designed to be mounted in a sealed way, one (15) on the outer shell (51, 61) of said joint, and one (13) on the shaft (70) coming out of said joint, and one or more sealing elements (20a-20d) placed on the internal wall (21a-21d) of one or more of said mounting sections (16a-16d) designed to be mounted on the outer shell of said joint (50, 60), **characterized in that** each mounting section (16a-16d) is provided on the outer wall with a seat (5) having appropriate shape and sizes for receiving a clamp (40) therein; and that each of said sealing elements (20a-20d) of the mounting sections (16a-16d) designed to be mounted on the outer shell (51, 61) of said joint is connected to the internal wall (21a-21d) of the respective mounting section by means of a connecting portion (26a-26d) having a shape with an axial smaller dimension than said sealing element and in which said sealing elements (20a-20d) and said connecting portions (26a-26d) are made of one piece with the internal walls (21a-21d) of said one or more mounting sections (16a-16d) so as to allow the removal of a sealing element from a mounting section to be fitted on the joint shell by leaving the internal wall smooth in case the boot (10) is to be mounted on a joint (50) with a smooth shell (51), and to allow a sealing element to be held attached to the internal wall in case the boot (10) is to be mounted on a joint (60) having one or more grooves (65) made on the outer shell (61).

2. A device according to Claim 1, wherein said sealing elements (20a-20d) have a continuous annular development.

3. A device according to Claim 1, wherein said sealing elements (20a-20d) have a substantially circular cross section.

4. A device according to Claim 1, wherein said tubular body (12) has a central portion substantially shaped as a cone or a truncated cone.

5. A device according to Claim 4, wherein said central portion has a substantially undulated shape to enable flexure of the device (10), as well as extension and contraction in the axial direction of the device.

6. A device according to Claim 1, wherein said opposite end portions (13, 15) have different diameters.

7. A device according to Claim 1, wherein at feast one end portion (15) is provided with one or more mounting sections (16a-16d) having different diameters.

8. A device according to Claim 6 or 7, wherein said sealing elements (20a-20d) are placed at least in positions corresponding to the mounting sections (16a-16d) present on the end portion (15) of larger diameter.

9. A process for mounting a protective boot (10) on an articulated rotating joint (50, 60), said boot being made of soft and elastic material and comprising a tubular body (12) having opposite end portions (13, 15), said end portions comprising one or more substantially cylindrical mounting sections (16a-16d) designed to be mounted in a sealed way. one (15) on the outer shell (51, 61) of said joint and one (13) on the shaft (70) coming out of said joint, and one or more seating elements (20a-20d) placed on the internal wall (21a-21d) of one or more of said mounting sections (16a-16d), **characterized by** the steps of:
removing a sealing element from the internal wall by leaving the internal wall smooth, in case the boot (10) is to be mounted on a joint (50) with a smooth outer shell (51); and
fitting a mounting section (16a, 16b, 16c or 16d) of said boot (10) having a diameter corresponding to that of the outer shell of said joint on the outer shell (51) of the same.

10. A process according to claim 9, including the step of removing one or more mounting sections (16a, 16b, 16c or 16d) of the boot (10) having a diameter larger than that of the outer shell of the joint (50) before fitting the boot on the outer shell (51) of the joint.

11. A process according to claim 9, including the step of mounting a clamp (40) in a seat (5) provided on the outer wall of the mounting section (16a, 16b, 16c or 16d) of the boot (10) fitted on the outer shell (51) of the joint.

## Patentansprüche

1. Vorrichtung oder Manschette (10) zum Schutz eines gegliederten Drehgelenks (50, 60) von der Art, die aus einem weichen und elastischen Material gemacht ist, und umfassend einen schlauchförmigen Körper (12) mit gegenüberliegenden Endteilen (13,15), wobei die Endteile einen oder mehrere im Wesentlichen zylindrische Befestigungsabschnitte (16a - 16d) umfassen, die in dichtender Weise befestigt werden sollen, einer (15) an der Außenschale (51, 61) des Gelenks und einer (13) an der aus dem Gelenk austretenden Welle (70), und ein oder mehrere Dichtungselemente (20a - 20d), die an der Innenwand (21a - 21d) eines oder mehrerer Befestigungsabschnitte (16a16d) sitzen, die auf der Außenschale des Gelenks (50, 60) befestigt werden sollen, **dadurch gekennzeichnet, dass** jeder Befestigungsabschnitt (16a - 16d) an der Außenwand mit einem Sitz (5) versehen ist, der die geeignete Form und Größe zur Aufnahme einer Klammer (40) aufweist; und dass jedes der Dichtungselemente (20a - 20d) der Befestigungsabschnitte (16a - 16d), die an der Außenschale (51, 61) des Gelenks befestigt werden sollen, mit der Innenwand (21a - 21d) des entsprechenden Befestigungsabschnitts mit Hilfe eines Verbindungsteils (26a - 26d) verbunden ist, das eine Form mit einer axial kleineren Abmessung als das Dichtungselement aufweist, und wobei die Dichtungselemente (20a - 20d) und Verbindungsteile (26a - 26d) mit den Innenwänden (21a - 21d) eines oder mehrerer Befestigungsabschnitte (16a - 16d) aus einem Stück gemacht sind, so dass das Entfernen eines Dichtungselements vom Befestigungsabschnitt möglich ist, um durch Hinterlassen einer glatten Innenwand auf der Gelenkschale festgemacht werden zu können, für den Fall, dass die Manschette (10) auf einem Gelenk (50) mit glatter Schale (51) montiert werden soll, und um zu ermöglichen, dass ein Dichtungselement fest an der Innenwand gehalten werden kann, für den Fall, dass die Manschette (10) an einem Gelenk (60) mit einer oder mehreren Auskehlungen (65) auf der Außenschale (61) zu montieren ist.

2. Vorrichtung nach Anspruch 1, wobei die Dichtungselemente (20a - 20d) eine durchgehend ringförmige Ausführung haben.

3. Vorrichtung nach Anspruch 1, wobei die Dichtungselemente (20a - 20d) einen im Wesentlichen kreisförmigen Querschnitt aufweisen.

4. Vorrichtung nach Anspruch 1, wobei der schlauchförmige Körper (12) einen Mittelteil aufweist, der im Wesentlichen als Kegel oder als Kegelstumpf geformt ist.

5. Vorrichtung nach Anspruch 4, wobei der Mittelteil eine im Wesentlichen wellige Form aufweist, um das Biegen der Vorrichtung (10) wie auch das Dehnen und Zusammenziehen in der axialen Richtung der Vorrichtung zu ermöglichen.

6. Vorrichtung nach Anspruch 1, wobei die gegenüberliegenden Endteile (13, 15) unterschiedliche Durchmesser aufweisen.

7. Vorrichtung nach Anspruch 1, wobei wenigstens ein Endteil (15) mit einem oder mehreren Befestigungsabschnitten (16a - 16d) versehen ist, die unterschiedliche Durchmesser aufweisen.

8. Vorrichtung nach Anspruch 6 oder 7, wobei die Dichtungselemente (20a - 20d) wenigstens an den Stellen angeordnet sind, die den am Endteil (15) mit größerem Durchmesser vorhandenen Befestigungsabschnitten (16a - 16d) entsprechen.

9. Verfahren zum Anbringen einer Schutzmanschette (10) an ein gegliedertes Drehgelenk (50, 60), wobei die Manschette aus einem weichen und elastischen Material gemacht ist und einen schlauchförmigen Körper (12) mit gegenüberliegenden Endteilen (13, 15) umfasst, wobei die Endteile einen oder mehrere im Wesentlichen zylindrische(n) Befestigungsabschnitte (16a - 16d) umfassen, die in dichtender Weise befestigt werden sollen, einer (15) an der Außenschale (51, 61) des Gelenks und einer (13) an der aus dem Gelenk austretenden Welle (70), und ein oder mehrere Dichtungselemente (20a - 20d) an der Innenwand (21a - 21d) eines oder mehrerer Befestigungsabschnitte (16a - 16d) angebracht sind, **gekennzeichnet durch** die Schritte:
Entfernen eines Dichtungselements von der Innenwand **durch** Hinterlassen einer glatten Innenwand für den Fall, dass die Manschette (10) auf einem Gelenk (50) mit einer glatten Außenschale (51) zu montieren ist; und
Anbringen eines Befestigungsabschnitts (16a, 16b, 16c oder 16d) der Manschette (10), der einen Durchmesser aufweist, der demjenigen der Außenschale des Gelenks entspricht, auf der Außenschale (51) desselben.

10. Verfahren nach Anspruch 9, umfassend den Schritt des Entfernens eines oder mehrerer Befestigungsabschnitte (16a, 16b, 16c oder 16d) der Manschette (10) mit einem Durchmesser größer als derjenige der Außenschale des Gelenks (50) vor dem Anbringen der Manschette an der Außenschale (51) des Gelenks.

11. Verfahren nach Anspruch 9, umfassend den Schritt des Anbringens einer Klammer (40) in einem Sitz (5), bereitgestellt an der Außenwand des Befestigungsabschnitts (16a, 16b, 16c oder 16d) der Manschette (10), die an der Außenschale (51) des Gelenks angebracht ist.

## Revendications

1. Dispositif ou protecteur (10) destiné à la protection d'un joint tournant articulé (50, 60), du type fait d'un matériau tendre et élastique et comprenant un corps tubulaire (12) présentant des parties terminales opposées (13, 15), lesdites parties terminales comprenant une ou plusieurs parties de montage sensiblement cylindriques (16a-16d) conçues pour être montées de façon étanche, l'une (15) sur la chape extérieure (51, 61) dudit joint, et l'autre (13) sur l'arbre (70) sortant dudit joint, et un ou plusieurs éléments d'étanchéité (20a-20d) placés sur la paroi intérieure (21a-21d) de l'une ou plusieurs desdites parties de montage (16a-16d) conçues pour être montées sur la chape extérieure dudit joint (50, 60), **caractérisé en ce que** chaque partie de montage (16a-16d) est disposée sur la paroi extérieure avec un siège (5) ayant une forme et des dimensions appropriées pour y recevoir un collier de serrage (40) ; et **en ce que** chacun desdits éléments d'étanchéité (20a-20d) des parties de montage (16a-16d) conçues pour être montées sur la chape extérieure (51, 61) dudit joint est connecté à la paroi intérieure (21a-21d) de la partie de montage respective par le moyen d'une partie de connexion (26a-26d) ayant une forme avec une dimension axiale inférieure à celle dudit élément d'étanchéité et où lesdits éléments d'étanchéité (20a-20d) et lesdites parties de connexion (26a-26d) sont faits d'une seule pièce avec les parois intérieures (21a-21d) desdites une ou plusieurs parties de montage (16a-16d) de façon à permettre le retrait d'un élément d'étanchéité depuis une partie de montage devant être ajustée sur la chape du joint en laissant la paroi intérieure lisse dans le cas où le protecteur (10) doit être monté sur un joint (50) avec une chape lisse (51), et pour permettre à un élément d'étanchéité d'être maintenu fixé à la paroi intérieure dans le cas où le protecteur (10) doit être monté sur un joint (60) présentant une ou plusieurs rainures (65) faites sur la chape extérieure (61).

2. Dispositif selon la revendication 1, dans lequel lesdits éléments d'étanchéité (20a-20d) présentent un développement annulaire continu.

3. Dispositif selon la revendication 1, dans lequel lesdits éléments d'étanchéité (20a-20d) présentent une section transversale sensiblement circulaire.

4. Dispositif selon la revendication 1, dans lequel ledit corps tubulaire (12) présente une partie centrale sensiblement en forme de cône ou de tronc de cône.

5. Dispositif selon la revendication 1, dans lequel ladite partie centrale présente une forme sensiblement ondulée de façon à permettre une flexion du dispositif (10), aussi bien qu'une extension et une contraction selon la direction axiale du dispositif.

6. Dispositif selon la revendication 1, dans lequel lesdites parties terminales opposées (13, 15) ont des diamètres différents.

7. Dispositif selon la revendication 1, dans lequel au moins une partie terminale (15) est munie d'une ou plusieurs parties de montage (16a-16d) ayant des diamètres différents.

8. Dispositif selon les revendications 6 ou 7, dans lequel lesdits éléments d'étanchéité (20a-20d) sont au moins placés dans des positions correspondant aux parties de montage (16a-16d) présentes sur la partie terminale (15) de plus grand diamètre.

9. Procédé pour le montage d'un protecteur (10) sur un joint tournant articulé (50, 60), ledit protecteur étant fait d'un matériau tendre et élastique et comprenant un corps tubulaire (12) présentant deux parties terminales opposées (13, 15), lesdites parties terminales comprenant une ou plusieurs parties de montage sensiblement cylindriques (16a-16d) conçues pour être montées de façon étanche, l'une (15) sur la chape extérieure (51, 61) dudit joint, et l'autre (13) sur l'arbre (70) sortant dudit joint, et un ou plusieurs éléments d'étanchéité (20a-20d) placés sur la paroi intérieure (21a-21d) de l'une ou plusieurs desdites parties de montage (16a-16d), **caractérisé par** les étapes de :
retrait d'un élément d'étanchéité depuis la paroi intérieure en laissant la paroi intérieure lisse dans le cas où le protecteur (10) doit être monté sur un joint (50) avec une chape extérieure (51) lisse ; et
mise en place d'une partie de montage (16a, 16b, 16c ou 16d) dudit protecteur (10) ayant un diamètre correspondant à celui de la chape extérieure dudit joint sur la chape extérieure (51) du même.

10. Procédé selon la revendication 9, comportant l'étape de retrait d'une ou plusieurs parties de montage (16a, 16b, 16c ou 16d) du protecteur (10) ayant un diamètre supérieur à celui de la chape extérieure du joint (50) avant la mise en place du protecteur sur la chape extérieure (51) du joint.

11. Procédé selon la revendication 9, comportant l'étape de montage d'un collier de serrage (40) sur un siège (5) disposé sur la paroi extérieure de la partie de montage (16a, 16b, 16c ou 16d) du protecteur (10) montée sur la chape extérieure (51) du joint.
